# EUROPEAN PATENT SPECIFICATION

(11) **EP 2 853 572 B1**
(45) Date of publication and mention of the grant of the patent: **22.01.2020**
(21) Application number: 14171478.2
(22) Date of filing: 06.06.2014
(51) Int. Cl.: C09J 103/00, C09J 129/04, C09J 139/06, C09J 5/00

(54) **Water-in-oil emulsified adhesive**
Haftmittel auf Basis einer Wasser-in-Öl-Emulsion
Adhésive de type émulsion eau dans l'huile

(30) Priority: 10.06.2013 JP 2013121507
(43) Date of publication of application: 01.04.2015
(73) Proprietor: Riso Kagaku Corporation, Tokyo, 108-8385 (JP)
(72) Inventor: Hayashi, Akiko, Ibaraki, Ibaraki 305-0822 (JP); Urano, Yuki, Ibaraki, Ibaraki 305-0822 (JP); Kinoe, Kokoro, Ibaraki, Ibaraki 305-0822 (JP); Ogawa, Hiroyuki, Ibaraki, Ibaraki 305-0822 (JP)
(74) Representative: SSM Sandmair

(56) References cited:
- US-A- 3 103 858

## Description

### BACKGROUND

### Technical Field

The present invention relates to a water-in-oil type emulsion adhesive, which is preferably used, especially for paper.

### Related Art

As a method for imparting an extra value to a sheet paper on which an image has been formed, preparation of booklets and preparation of sealed matters attract attention. For example, in direct mails and the like, paper sheets that are folded to be formed into envelopes, so-called selfmailers, are used.

In conducting in-line processing of a booklet or sealed matter having optional size and shape in a device for post-processing after printing (finisher) by using, for example, a machine such as a device for preparing sealed matters and a device for preparing booklets, there are following problems: (1) expression of adhesiveness within a short time (a short set time), (2) open shelf stability, and (3) securement of storage stability.

Specifically, in the preparation of booklets and the preparation of sealed matters, an adhesive may be left for a long time in a machine in an open state that is not a sealed state. In the case when the adhesive is dried to form a coating during being left in an open space, the abnormal operation of the device and the application defect of the adhesive may arise.

Furthermore, since it is necessary to transport a paper sheet after applying the adhesive onto the sheet to attach the sheet, the adhesive easily dries after the application. Therefore, it is necessary to conduct the adhesion within a short time.

As adhesives for paper, aqueous adhesives each formed by dissolving or dispersing a polymer compound such as polyvinyl alcohol (PVA) and polyvinyl acetate in water are known. Among polymer compounds, PVA is generally and widely used since it is highly safe and has fine workability and adhesibility. JP 11-263955 A, JP 2003-193011 A and JP 2000-26825 A each discloses an aqueous adhesive using PVA.

In order to shorten an adhesion time, it is also known to use a hot-melt type adhesive, an active ray curable adhesive or the like, and the adhesion time is shortened by providing energy such as heating and irradiation with active ray after the application of the adhesive. JP 2003-25759 A discloses a bookbinding device that is configured to bind books by using a hot-melt type adhesive.
US 3 103 858 A discloses an oil-in-water type emulsion adhesive including an oil phase and an aqueous phase.

### SUMMARY

However, all of these aqueous adhesives of known techniques have poor open shelf stability, and are dried by the evaporation of water content to form a coating easily when left in a machine. Therefore, the aqueous adhesives are not suitable for in-line use.

Furthermore, when the ratio of the active ingredient in an adhesive is increased aiming at shortening of a set time, a coating is formed more and more easily.

Furthermore, since energy is required for adhesion in hot-melt and energy curable adhesives, the consumed power significantly increases, and this is not preferable in view of environmental conservation. There is also a problem that a device tends to be large since it includes mechanisms for heating, irradiation of active ray, and the like.

An object of the present invention is to provide a water-in-oil type emulsion adhesive, which has excellent open shelf stability and thus is difficult to form a coating in a machine, has excellent storage stability, and has a short set time that allows rapid adhesion with low energy.

### DETAILED DESCRIPTION

The present invention that solves the above-mentioned problem is as follows.
(1) A water-in-oil type emulsion adhesive including an oil phase and an aqueous phase, wherein the oil phase contains at least an organic solvent and an emulsifier, the aqueous phase contains at least water and a polymer compound, and the aqueous phase has a particle diameter of from 1 to 100 µm by a volume-based average diameter; wherein the emulsifier includes at least one compound selected from the group consisting of a glycerin aliphatic acid ester, urethane acrylic polymers and nitrogen-containing graft polymers having polyester side chains; and the polymer compound includes at least one compound selected from the group consisting of starch, glue, polyvinyl alcohol, water-soluble cellulose, polyvinyl pyrrolidone, polyvinyl acetate, ethylene-vinyl acetate copolymer, vinyl acetate-(meth)acrylic acid ester copolymer, poly(meth)acrylic acid ester, polystyrene, styrene(meth)acrylic acid ester copolymer, styrene-butadiene copolymer, polyvinyl chloride and polyurethane.
(2) The water-in-oil type emulsion adhesive according to (1), wherein the aqueous phase has a volume-based average diameter of from 10 to 30 µm.
(3) The water-in-oil type emulsion adhesive according to (1) or (2), wherein the aqueous phase contains water content in an amount of from 75 to 85% by mass.

According to the present invention, a water-in-oil type emulsion adhesive, which has excellent open shelf stability and thus is difficult to form a coating in a machine, has excellent storage stability, and has a short set time that allows rapid adhesion with low energy can be provided.

The water-in-oil type emulsion adhesive according to the present invention (hereinafter also simply referred to as "adhesive") is containing an oil phase and an aqueous phase, wherein the oil phase contains at least an organic solvent and an emulsifier, the aqueous phase contains at least water and a polymer compound, and the aqueous phase has a particle diameter of from 1 to 100 µm by a volume-based average diameter (hereinafter simply referred to as "particle diameter").

By setting the particle diameter of the aqueous phase to 1 to 100 µm, the aqueous phase particles become larger than the minute gaps on the surface of paper, and thus the aqueous phase particles easily remain on the surface of the paper without penetrating into the inside of the paper. Furthermore, since the aqueous phase has a particle diameter of 1 to 100 µm, when two sheets of paper are attached to each other during adhesion, they form a constitution in which every aqueous phase particle is sandwiched between the paper sheets to be attached. In this constitution, the oil phase does not intervene among the paper-aqueous phase particles-paper, adhesion easily expresses, and the set time is shortened. Conversely, when the aqueous phase has a particle diameter of less than 1 µm, the oil phase easily intervenes among the paper-aqueous phase particles-paper, and a disposition such as paper-oil phase-aqueous phase particles-oil phase-aqueous phase particles-oil phase-paper is easily formed. Therefore, the oil phase inhibits the adhesion of the paper sheets by the aqueous phase, and thus adhesion is difficult to be expressed, and the set time is extended. Accordingly, the particle diameter of the aqueous phase is an important parameter for ensuring a short set time.

The significance of the particle diameter of the aqueous phase (1 to 100 µm) and the like will be mentioned below.

In the water-in-oil type emulsion adhesive of the present invention, an adhesive that has excellent open shelf stability and storage stability, and has a short set time that allows rapid attachment with low energy can be obtained by including an oil phase and an aqueous phase, wherein the oil phase contains at least an organic solvent and an emulsifier, the aqueous phase contains at least water and a polymer compound, and the aqueous phase has a particle diameter of from 1 to 100 µm.

The water-in-oil type emulsion adhesive of the present invention will be explained in detail.

### [Aqueous Phase]

In the water-in-oil type emulsion adhesive according to the present invention, the aqueous phase contains at least water and a polymer compound.

It is preferable that the water content in the aqueous phase is preferably 40 to 90% by mass with respect to the total mass of the aqueous phase. By adjusting the range of the water content to the above-mentioned range, the adhesiveness becomes excellent, and the set time can be shortened. In some kinds of papers, in some cases when the water content exceeds 90% by mass, a long time is required for removing the water content, and thus the set time becomes slow. Furthermore, in some cases when the water content is less than 40% by mass, swelling of paper fibers by water cannot be expected and the surface area of the paper fibers (adhesion surface area) does not increase, and thus adhesion becomes difficult and the set time becomes slow. The water content in the aqueous phase is more preferably 75 to 85 % by mass. When the water content in the aqueous phase is 75 to 85% by mass with respect to the total mass of the aqueous phase, the fluidity after being left can also be ensured in addition to the set time, and thus the open shelf stability becomes especially fine.

The polymer compound to be included in the aqueous phase is a component that expresses adhesiveness and has adhesibility and coating formability. The polymer compound shows adhesiveness and examples include water-soluble polymers and water dispersible polymers such as starch, glue, polyvinyl alcohol (hereinafter also represented by "PVA"), water-soluble cellulose, polyvinyl pyrrolidone (hereinafter also represented by "PVP"), polyvinyl acetate, ethylene-vinyl acetate copolymer, vinyl acetate-(meth)acrylic acid ester copolymer, poly(meth)acrylic acid ester, polystyrene, styrene-(meth)acrylic acid ester copolymer, styrene-butadiene copolymer, polyvinyl chloride and polyurethane. Among these, PVP, PVA and starch can be preferably used. Meanwhile, the indication "(meth)acrylic acid" means acrylic acid or methacrylic acid.

The polymer compound may be synthesized in accordance with a known production method, or various commercially available polymer compounds can also be used. Examples of the commercially available polymer compounds include PVPs such as PVP K30 and K90 manufactured by Wako Pure Chemical Industries, Ltd. Examples of PVAs include "RS-1704", "RS-2117", "RS-4104", "PVA110", "PVA117", "PVA203", "PVA205", "PVA210", "PVA217", "PVA220", "PVA403", "PVA405", "PVA417" and "PVA505" manufactured by Kuraray Co., Ltd., "GH-14", "GH-17", "GH-20", "GH-23" "C-500", "P-610" and "AL-06R" manufactured by Nippon Synthetic Chemical Industry Co., Ltd., and "VM-17" and "VM-13KY" manufactured by Japan VAM & POVAL Co., Ltd. The polymer compound may also be a derivatized polymer.

In the present invention, different kinds of polymer compounds may be used in combination. For example, PVP and PVA may be used in combination.

Although the molecular weight of the polymer compound is not especially limited, a PVP having a molecular weight of 5,000 to 500,000, and a PVA having a molecular weight of 5,000 to 100,000 are preferably used. The "molecular weight" as used herein means a weight average molecular weight measured by GPC (in terms of standard polystyrene).

In the present invention, the polymer compound is preferably 15 to 60% by mass, more preferably 20 to 50% by mass, even more preferably 25 to 40% by mass with respect to the total mass of the above-mentioned aqueous phase, from the viewpoint of ensuring of sufficient adhesiveness.

Furthermore, the polymer compound is contained by preferably 10% by mass or more, more preferably 20% by mass or more, even more preferably 30% by mass or more with respect to the whole amount of the adhesive, from the viewpoint of ensuring of the strength of the adhesive coating. When the polymer compound is contained by less than 10% by mass with respect to the whole amount of the adhesive, the set time may become slow depending on the environment. Furthermore, although the upper limit value of the content of the polymer compound may be a value at which the oil phase and aqueous phase can be formed, it is preferably 55% by mass or less with respect to the whole amount of the adhesive since a longer labor time is required for mixing the polymer compound with water as the ratio of the polymer compound to the whole amount of the adhesive increases.

In the present invention, as mentioned above, the particle diameter of the aqueous phase is 1 to 100 µm. By setting the particle diameter to 1 µm or more, it becomes possible to filtrate the aqueous phase through paper fibers. Specifically, it becomes possible to remove the oil phase from the paper surface to the inside of the paper while leaving the aqueous phase on the paper surface. By this way, a short set time can be attained. Furthermore, since the separation of the aqueous phase and oil phase is suppressed by setting the particle diameter to 100 µm or less, the storage stability and open shelf stability are improved. In addition, coating unevenness is difficult to arise by setting the particle diameter to 100 µm or less. Accordingly, in the case when the particle diameter is less than 1 µm, the set time becomes slow, and the storage stability deteriorates. In the case when the particle diameter of the aqueous phase exceeds 100 µm, the storage stability deteriorates, and the open shelf stability deteriorates. The aqueous phase has a particle diameter of preferably 5 to 50 µm, more preferably 10 to 30 µm. Especially when the particle diameter is 5 to 50 µm, immediate adhesion is possible and the storage stability is fine in the case of in-line use.

In the present invention, the volume-based average diameter refers to an average diameter in volume-based particle diameter distribution, and can be measured by, for example, a laser diffraction/scattering particle diameter distribution measurement method.

The water-in-oil type emulsion adhesive according to the present invention can be prepared by mixing the aqueous phase and oil phase, and emulsifying the mixture by applying shear.

The method for applying shear includes a method including utilizing shear action that arises by rotating a stirring blade or a stirring bar, a method including flowing a high pressure fluid through a narrow gap and utilizing strong shear action that the fluid undergoes during the flowing, and the like.

In the present invention, the particle diameter of the aqueous phase can be controlled by, for example, suitably presetting the components of the adhesive and the conditions for emulsification. Furthermore, by controlling the particle diameter of the aqueous phase in such way, the particle diameter can be set within the above-mentioned range. For example, the particle diameter can be decreased by increasing the oil phase viscosity of the adhesive. Furthermore, in the case when emulsification is conducted by stirring, the particle diameter can be decreased by increasing the stirring velocity or extending the stirring time.

Furthermore, although the viscosity of the aqueous phase is not especially limited, the tack tends to be stronger at a higher viscosity, and thus a high viscosity is effective for shortening the set time. Therefore, the viscosity of the aqueous phase is preferably 10 Pa·s or more at a 23°C shear rate of 100 s⁻¹.

In the aqueous phase, other components can be incorporated to the extent that the effect of the present invention is not deteriorated. Examples of the other components include wetting agents, electrolytes, anti-mold agents, antioxidants, water evaporation inhibitors, pH adjusting agents, pigments, colorants such as dyes, and inorganic fillers.

### [Oil Phase]

In the water-in-oil type emulsion adhesive according to the present invention, the oil phase contains at least an organic solvent and an emulsifier.

As the organic solvent, an organic solvent having a solubility in water at 25°C of preferably 0.5% by mass or less, more preferably 0.1% by mass or less, from the viewpoint of allowing phase separation into the aqueous phase and oil phase. The organic solvent has a boiling point of preferably 150 to 350°C. The boiling point is a value that becomes a rough standard of the easiness of evaporation of the solvent, and the lower the boiling point is, the solvent tends to easily evaporate, and the higher the boiling point is, the solvent tends to be difficult to evaporate. It is necessary that the oil phase in the adhesive exerts a function to become the outer phase of the aqueous phase particles to thereby suppress the evaporation of the water content from the aqueous phase. Therefore, by selecting a solvent having a boiling point of 150°C or more as the solvent for the oil phase, the oil phase becomes difficult to evaporate, and thus the evaporation of the water content from the aqueous phase can be suppressed.

On the other hand, as the solvent for the oil phase, a solvent that quickly scatters by penetrating into paper and evaporating when being applied onto the paper is preferable. If the solvent in the oil phase quickly scatters when the adhesive is applied to the paper, the degradation of the emulsion can be promoted, and thus an effect to shorten the set time of the adhesive can be obtained. By selecting a solvent having a boiling point of 350°C or less as the solvent for the oil phase, an adhesive having a short set time, which easily scatters when applied onto paper while suppressing the evaporation of the solvent when the adhesive is kept open, can be obtained.

Examples of the above-mentioned solvent include mineral oils such as motor oil, spindle oil, machine oil and liquid paraffin, and plant oils such as olive oil, castor oil and salad oil; hydrocarbon-based solvents such as aromatic hydrocarbon-based solvents, aliphatic hydrocarbon-based solvents, mixed solvents of aromatic hydrocarbons and aliphatic hydrocarbons, paraffin-based hydrocarbon-based solvents, isoparaffin-based hydrocarbon-based solvents and naphthene-based hydrocarbon-based solvents. Among these solvents, aliphatic hydrocarbon-based solvents are preferable from the viewpoints of safeness and sanitation. Specifically, naphthene-based solvents such as Teclean N20 and Teclean N22 manufactured by JX Nippon Oil & Energy Co., Ltd., Exxsol D80 manufactured by Exxon Mobil Corporation, and Supersol P02, Supersol S02 and Supersol CA30 manufactured by Idemitsu Kosan Co., Ltd.; n-paraffin-based solvents such as 0 grade Solvent L and 0 grade Solvent M manufactured by JX Nippon Oil & Energy Co., Ltd.; Isoper L and Isoper M manufactured by Exxon Mobil Corporation, and Supersol FP30 manufactured by Idemitsu Kosan Co., Ltd., and the like are preferably used. Those solvents can be used singly or by mixing two or more kinds as necessary.

In order to constitute the water-in-oil type emulsion, an emulsifier is added to the oil phase. The emulsifier has the effect of emulsifying the oil phase and aqueous phase, and for example, a surfactant, a polymer dispersing agent, a resin or the like can be used.

Examples of the surfactant include, but are not limited to, hexaglyceryl hexaoleate, hexaglyceryl polyricinolate, sorbitan higher aliphatic acid esters, polyoxyethylenesorbitan higher aliphatic acid esters, aliphatic acid monoglyceride, aliphatic acid diglyceride, higher alcohols, alkylphenols, aliphatic acids, ethylene oxide-added surfactants such as ether type surfactants such as oleic ethers to which 2 to 30 mol of polyoxyethylene has been added (hereinafter abbreviated as POE (2 to 30)), POE (2 to 35) stearyl ethers, POE (2 to 20) lauryl ethers, POE (1 to 20) alkyl phenyl ethers, POE (6 to 18) behenyl ethers, POE (5 to 25) 2-decylpentadecyl ethers, POE (3 to 30) 2-decyltetradecyl ethers and POE (8 to 16) 2-octyldecyl ethers; ether ester type surfactants such as POE (4 to 60) hardened castor oils, POE (3 to 14) aliphatic acid monoesters, POE (6 to 30) aliphatic acid diesters and POE (5 to 20) sorbitanaliphatic acid esters; and POE (2 to 30) glyceryl monoisostearates, POE (10 to 60) glyceryl triisostearates, POE (7 to 50) hardened castor oil monoisostearates and POE (12 to 60) hardened castor oil triisostearates; polyhydric alcohol aliphatic acid ester type surfactants such as glycerin aliphatic acid esters such as decaglyceryl tetraoleate, hexaglyceryl triisostearate, diglyceryl diisostearate and glyceryl monooleate. The above-mentioned nonionic surfactants may be used singly, or by mixing as necessary.

As the polymer dispersing agent, hydroxyl group-containing carboxylic acid esters, salts of long chain polyaminoamides and high-molecular weight acid esters, salts of high-molecular weight polycarboxylic acids, salts of long chain polyaminoamides and polar acid esters, high-molecular weight unsaturated acid esters, copolymerized products of polymer compounds, modified polyurethanes, modified polyacrylates, polyether ester type anionic activators, naphthalene sulfonic acid-formalin condensate salt, polyoxyethylene alkyl phosphate esters, polyoxyethylene nonyl phenyl ethers, polyester polyamines, stearyl amine acetate and the like are preferably used. These may be used singly, or in combination of plural kinds.

Specific examples of commercially available polymer dispersing agents include "Solsperse 13940 (polyesteramine-based), 17000, 18000 (aliphatic acid amine-based), 11200, 22000, 24000 and 28000" (these are all trade names) manufactured by Lubrizol Japan Ltd., "Flowlen DOPA-15B" (trade name) manufactured by Kyoeisha Chemical Co., Ltd., "DA-703-50, DA-7300 and DA234" (these are all trade names) manufactured by Kusumoto Chemicals, Ltd., "Disperbyk-101" (trade name) manufactured by BykChemie, "Hinoact" (trade name) manufactured by Kawaken Fine Chemicals Co., Ltd., "Antaron V-216, Ganex v-216, Antaron V-220 and Ganex V-220" (these are all trade names) manufactured by ISP and "Unimer U-151 and Unimer U-15" (these are all trade names) manufactured by Induchem.

Examples of the resin include polyamide resins, urethane resins, alkyd-modified phenol resins, rosin ester resins, rosin-modified alkyd resins, rosin-modified phenolic resins, alkyd resins, petroleum resins, oil or fat compounds, modified oil or fat compounds, gilsonite, polybutadiene, hydrogenated polybutadiene, acrylic resins, melamine resins, urea resins, phenolic resins, silicone resins, epoxy resins, cellulose resins, maleic acid resins, polymerized rosin esters, terpene resins, soybean oil-modified alkyd resins and the like.

The emulsifiers are selected from the group consisting of glycerin aliphatic acid esters, such as decaglyceryl tetraoleate, hexaglyceryl triisostearate, diglyceryl diisostearate and glyceryl monooleate, urethane acrylic polymers, and nitrogen-containing graft polymers having polyester side chains.

The urethane acrylic polymers mean acrylic polymers having urethane groups. The urethane acrylic polymer has a molecular weight of preferably about 10,000 to 100,000, and the mass ratio of the acrylic polymer (the backbone polymer as a main chain) and the urethane group part (the branch polymer as a side chain) is preferably 60 : 40 to 99 : 1, more preferably 70 : 30 to 99 : 1.

The mass of the copolymer part in the acrylic polymer is the total mass of the monomers used in the copolymerization, and the mass of the introduced urethane group part is the mass of the amino alcohol and polyvalent isocyanate compound used in the reaction. In the case when a polyvalent alcohol is used, the mass of this is also added to the total mass.

On the other hand, the nitrogen-containing graft polymer having polyester side chains contain a polyester as the graft chains and a nitrogen-containing polymer as the main chain. A polymer having a comb structure is preferable.

In more detail, a polymer that is a compound having a main chain containing many nitrogen atoms such as a polyalkylene imine and plural side chains that are amide-bonded through the nitrogen atoms, wherein the side chains are polyester chains, can be exemplified. Such polymer is disclosed in, for example, JP 5-177123 A (US 4,645,611).

The nitrogen-containing polymer as the main chain has a weight average molecular weight of preferably 600,000 or less and preferably has plural side chains, and the side chains each has a polymerization degree of preferably about 3 to 80, but either of the average molecular weight and side chains is not limited to these. The main chain is preferably a polyalkyleneimine such as polyethyleneimine, and the polyalkyleneimine may be a straight chain or a branched chain, more preferably a branched chain. The side chain is preferably a polymer containing a (carbonyl-C3 to C6-alkyleneoxy group) as a unit, and is preferably bonded to the main chain through an amide or salt-crosslinking group. Commercially available products that can be preferably used include Solsperse 28000, Solsperse 11200 and Solsperse 13940 manufactured by Lubrizol Japan Ltd.

By using the urethane acrylic polymer or the nitrogen-containing graft polymer having polyester side chains, the set time can further be shortened.

Furthermore, a gelling agent can be used in the oil phase. In the case when the gelling agent is used, the content of the gelling agent is preferably 0.05 to 10.0% by mass, more preferably 0.2 to 3.0% by mass with respect to the total mass of the adhesive. In the case when the content of the gelling agent is much, the viscosity of the oil phase increases and the oil phase becomes difficult to permeate paper, and thus the set time tends to be slow. The oil phase with a shear rate of 100S⁻¹ has a viscosity of preferably 1 Pa·s or less, more preferably 0.1 Pa·s or less. Examples of the gelling agent include aliphatic acid amides, organic bentonite, silica gel, hydrogenated castor oil and polyethylene wax.

In the water-in-oil type emulsion adhesive according to the present invention, the mass ratio of the aqueous phase to the oil phase (aqueous phase : oil phase) is preferably 80 : 20 to 95 : 5, more preferably 85 : 15 to 90 : 10.

If the oil phase is greater than the aqueous phase : oil phase of 80 : 20 in the aqueous phase, the storage stability deteriorates, or oil blots become distinct since the oil phase bleeds on the paper. If the oil phase is smaller than the aqueous phase : oil phase of 95 : 5, the storage stability deteriorates, or coating unevenness becomes distinct.

The water content in the water-in-oil type emulsion adhesive according to the present invention is preferably 35 to 85% by mass, more preferably 40 to 80% by mass, even more preferably 50 to 75% by mass, from the viewpoints of a short set time and ensuring of open shelf stability. Similarly, the amount of the polymer compound is preferably 10 to 55% by mass, more preferably 10 to 40% by mass, even more preferably 10 to 35% by mass with respect to the total mass of the adhesive, from the viewpoint of adhesion strength.

On the other hand, in the water-in-oil type emulsion adhesive according to the present invention, in the case when X: the viscosity of the aqueous phase at 23°C and a shear rate of 100 s⁻¹, and Y: the viscosity of the oil phase at 23°C and a shear rate of 100 s⁻¹, X/Y > 10 is preferable, X/Y > 200 is more preferable, and X/Y > 2000 is further preferable. By setting X/Y > 10, the viscosity of the emulsion can be suppressed to be low. This is because the aqueous phase is separated at the oil phase having a low viscosity even an aqueous phase having a high viscosity is used. The upper limit of X/Y is not especially limited, but it is preferably 200,000 or less in view of easiness of emulsification.

Where necessary, one or more kinds of wetting agents, electrolytes, anti-mold agents, antioxidants, water evaporation inhibitors, pH adjusting agents, pigments, colorants such as dyes, inorganic fillers, and the like can be incorporated in the water-in-oil type emulsion adhesive according to the present invention.

The adherend or adherend material (substrate) to which the water-in-oil type emulsion adhesive according to the present invention is applied is not especially limited, it is preferable that the oil phase easily permeates inside of the adherend after the application of the adhesive. Therefore, a permeable substrate such as paper is preferable. The kind of the paper is not especially limited, and the adhesive can be widely applied to plain paper, high-quality paper, coated paper, art paper and the like. Especially, the kind of the paper that can exert the highest effect of the present invention is preferably plain paper from the viewpoint that an anchor effect can be expected. As used herein, the "plain paper" refers to paper containing pulp as a major raw material, and is defined in JIS P 0001 No. 6139. Specific examples can include high-quality paper, PPC copy paper and uncoated printing paper. Plain papers commercially available from various companies can also utilized, and various papers such as NPi Form, NPi high-quality (manufactured by Nippon Paper Industries Co., Ltd.), Riso Paper, Riso Enviromental Paper, Riso Paper IJ, Riso Paper IJ Matte, Riso Paper IJE Light, IJ Enviromental Paper Matte and IJ Paper Matte and Office Paper PW (manufactured by Riso Kagaku Corporation) can be utilized.

The use of the adhesive is also not especially limited. As mentioned below, it is preferable that the adhesive is used for the post processing after the printing, but the adhesive may be used before the printing, or may also be used for matters other than printed matters.

The method for applying the adhesive is not especially limited, and various application devices such as a syringe, a dispenser, a nozzle, an applicator, a coater and a hand pump can be used.

In order to prepare booklets or to prepare sealed matters, it is also possible to apply an adhesive by incorporating an application mechanism in a post processing device (finisher), and conducting patterning in-line on necessary portions.

As mentioned above, the adhesive according to the present invention rapidly expresses adhesiveness or tackiness even in a half-dried state after the application, and thus is excellent in shear adhesion strength. Therefore, even in the case of combination use with a device such as a finisher, the attached portion becomes difficult to be misaligned during the transportation (conveyancing) of the paper after the attaching. The finisher refers to a machine that conducts post processings after printing such as punching, stapling, paper folding and book binding in a lump.

### [Examples]

The present invention will further be specifically explained below with referring to Examples. However, the present invention is not construed to be limited by the following Examples.

### [Examples 1 to 19 and Comparative Examples 1 and 3 to 5]

In each of Examples and Comparative Examples (except for Comparative Example 4), the respective components were mixed so as to have the components and content ratios described in Tables 1 to 3 for the aqueous phase and oil phase, respectively. The components were warmed to 70°C and stirred for the aqueous phase, and the components were stirred as they were for the oil phase, whereby the aqueous phase component and oil phase component were prepared.

The details of the respective components are shown below.

### (Aqueous Phase)

PVA1: PVA405 manufactured by Kuraray Co., Ltd.
PVA2: PVA217 manufactured by Kuraray Co., Ltd.
PVP: K90 manufactured by Wako Pure Chemical Industries, Ltd.
Starch: waxy corn
Water: ion-exchanged water

### (Oil Phase)

Emulsifier 1: Hexaglyn PR-15 manufactured by Nikko Chemicals Co., Ltd.
Emulsifier 2: nitrogen-containing graft polymer having polyester side chains (Solsperse 11200 manufactured by Lubrizol Japan Ltd.)
Emulsifier 3: Decaglyn 5-O manufactured by Nikko Chemicals Co., Ltd.
Emulsifier 4: urethane acrylic polymer 1(see below)
Emulsifier 5: urethane acrylic polymer 2 (see below)
Viscosity adjusting agent: Quiontone CX495 manufactured by Zeon Corporation
Gelling agent: Disparlon 308 manufactured by Kusumoto Chemicals, Ltd.
Solvent 1: hexyl laurate manufactured by Kao Corporation
Solvent 2: AF7 manufactured by JX Nippon Oil & Energy

The method for synthesizing Emulsifier 4 and Emulsifier 5 will be described below.
(1) Firstly, 75 g of AF-7 (naphthene-based solvent; manufactured by JX Nippon Oil & Energy) was charged in a 300 ml four-necked flask, and the temperature was raised to 110°C under stirring, while the flask was aerated with a nitrogen gas. Subsequently, a mixture of 16.7 g of AF-7 and 2 g of Perbutyl O (t-butylperoxy 2-ethylhexanoate; manufactured by JX Nippon Oil & Energy) was added dropwise over 3 hours to each monomer mixture having the composition shown in Table 1, while the temperature was kept at 110°C. Thereafter, Perbutyl O was added by 0.2 g each at after 1 hour and 2 hours, while the temperature was kept at 110°C. Furthermore, the reactant was aged at 110°C for 1 hour and diluted with 10.6 g of AF-7 to give a solution of backbone polymer a, which contained 50% of a non-volatile content and was colorless and transparent.
A solution of another backbone polymer b was synthesized in a similar manner by the composition shown in Table 1. The notations such as "C12" in the brackets on the leftmost row of Table 1 indicate that the carbon number of each monomer is 12. In PSMA, (C16/C18) indicates that the carbon numbers of the palmityl group and stearyl group are 16 and 18, respectively.

**[Table 1]**

| | | Backbone polymer a | Backbone polymer b |
|---|---|---|---|
| PSMA(C16/C18) | Palmityl/stearyl methacrylate (manufactured by Kao Corporation) | 50 | 50 |
| LMA(C12) | Dodecyl methacrylate (manufactured by Kao Corporation) | 20 | - |
| EHMA(C8) | 2-Ethylhexyl methacrylate (manufactured by Mitsubishi Chemical Corporation) | - | 20 |
| AAEM | Acetoacetoxyethyl methacrylate (manufactured by Nippon Synthetic Chemical Industry Co., Ltd.) | 15 | 15 |
| GMA | Glycidyl methacrylate (manufactured by NOF Corporation) | 15 | 15 |
| (Unit: g) | | | |

(2) Secondly, 200 g of a solution of the backbone polymer a obtained above (solid content in solvent of AF-7 : 50%), 4.0 g of a Michael adduct (an adduct of diethanolamine/2-ethylhexyl acrylate) and 2.8 g of diethanolamine (manufactured by Nippon Shokubai Co., Ltd.) were charged in a 500 mL four-necked flask, and the temperature was raised to 110°C under stirring while the flask was aerated with a nitrogen gas. The temperature was kept at 110°C for 1 hour to complete the reaction between the glycidyl groups in the polymer and the diethanolamine. Thereafter, 0.2 g of dibutyltin dilaurate (manufactured by Wako Pure Chemical Industries, Ltd.) was added, and a mixture of 7.8 g of diisocyanate (1,3-bis(isocyanatomethyl)cyclohexane) (Takenate 600, manufactured by Mitsui Chemicals Polyurethanes, Inc.) and 72.0 g of hexyl laurate (LAH, manufactured by Kao Corporation) was added dropwise over 1 hour. After the dropwise addition, the temperature was raised to 120°C, and the solution was reacted for 6 hours and cooled to give urethane acrylic polymer solution A having a solid content of 40%. Polymer solution B was produced in a similar manner by the composition shown in Table 2. The obtained urethane acrylic polymers each has a weight average molecular weight (GPC method, in terms of standard polystyrene) of 22000 to 26000.

The method for preparing the above-mentioned Michael adduct (an adduct of diethanolamine/2-ethylhexylacrylate) is as follows.

The adduct was prepared by adding dropwise 61.4 g of 2-ethylhexyl acrylate to 35.05 g of diethanolamine under stirring at 50 to 60°C, warming the solution to 120°C, and maintaining 120°C for 2 hours. 4.0 g of the prepared Michael adduct was used.

**[Table 2]**

| | | | Urethane acrylic polymer solution A | Urethane acrylic polymer solution B |
|---|---|---|---|---|
| Long chain alkyl group (carbon number) | | | C16/18/12 | C16/18/8 |
| Amount of GMA(%) | | | 15 | 15 |
| Amount of AAEM (%) | | | 15 | 15 |
| Backbone polymer (g) | a | Solid content 50% | 200 | 0 |
| | b | Solid content 50% | 0 | 200 |
| Urethane base portion (g) | Michael adduct (diethanolamine/2-ethyhexyl acrylate adduct) | | 4.0 | 4.0 |
| | Diethanolamine | | 2.8 | 2.8 |
| | Diisocyanate | | 7.8 | 7.8 |
| | Dibutyltin dilaurate | | 0.2 | 0.2 |
| Solution for dilution | Hexyl laurate | | 72.0 | 72.0 |
| Total (g) | | | 286.8 | 286.8 |
| Mass ratio of backbone polymer/urethane base portion | | | 87/13 | 87/13 |
| Solid content of resin (%) | | | 40 | 40 |

Subsequently, the prepared aqueous phase component and oil phase component were mixed to give a mixed component, and the mixed component was stirred under any of the stirring conditions A to D shown in Tables 3 to 5 (the details are shown below) to give a water-in-oil type emulsion adhesive. For Comparative Example 4, the aqueous phase in the adhesive of Example 1 was used as it was.
A: 25 g of the mixed component was put into a 100 ml container and stirred at a rotation velocity of 2,000 rpm for 5 minutes.
B: 25 g of the mixed component was put into a 100 ml container and stirred at a rotation velocity of 2,000 rpm for 3 minutes.
C: 25 g of the mixed component was put into a 100 ml container and stirred at a rotation velocity of 500 rpm for 3 minutes.
D : 25 g of the mixed component was put into a 100 ml container and stirred at a rotation velocity of 100 rpm for 1 minute.

A desktop type sand mill (manufactured by Kansai Paint Co., Ltd.) was used for A to C, and a three-one-motor BL1200 (manufactured by Shinto Scientific Co., Ltd.) was used for D.

The evaluation tests shown below were conducted on the obtained adhesives.

### (1) Viscosity

Using a rheometer ARG2 manufactured by TA Instruments, the viscosities of the aqueous phase, oil phase and adhesive at 23°C were measured and deemed as viscosities.

In the measurements of the viscosities of the aqueous phase and adhesive, the viscosities at a shear rate 100S⁻¹ were obtained by using a 1 degree cone with a diameter of 20 mm. In the measurement of the viscosity of the oil phase, the viscosity at a shear stress of 10 Pa was obtained by using a 2 degree cone with a diameter of 40 mm.

### (2) Particle diameter of aqueous phase

0.2 g of the adhesive was diluted with hexyl laurate so as to be 2 g. 50 µL of this diluted solution was sampled and put into a laser diffraction/scattering particle diameter distribution meter LA950 manufactured by Horiba, Ltd. to give an average diameter in volume-based particle diameter distribution. The measurement was conducted in a recycling manner, and methyl oleate was used as the solvent for the recycle pathway.

### (3) Storage stability

The adhesive was subjected to 90% filling and sealing in a glass vial (volume: 5 ml) and left in an environment at 70°C. At three days, one week and two weeks after the leaving, the presence or absence of the separation of the adhesive was visually observed and determined according to the following criteria.
⊙ ... No separation was observed after leaving at 70°C for 2 weeks
○ ... No separation was observed after leaving at 70°C for 1 week
Δ ... No separation was observed after leaving at 70°C for 3 days
× ... Separation was observed after leaving at 70°C for 3 days

### (4) Open shelf stability

The adhesive was applied onto the surface of a metal plate to form a columnar adhesive having a diameter of 1 cm and a height of 1 mm, and the adhesive was left in an environment at 23°C and 50% for 24 hours. The state of the adhesive after the leaving was visually observed and determined according to the following criteria.
○ ... No coating was formed, and the adhesive had fluidity
Δ ... No coating was formed, and the adhesive had no fluidity
× ... A coating was formed, and the adhesive had no fluidity

### (5) Set time

As a paper substrate, a NPI Next IJ90 manufactured by Nippon Paper Industries Co., Ltd. was cut into 15 mm × 100 mm. The adhesive was applied onto the half in the longitudinal direction (15 mm × 50 mm) of the paper strip by using a wire bar (P0.2H21S). Immediately after the application, the paper strip was folded in half with directing the applied surface at inside, and the folded paper strip was pressurized from the upper side by rotating a roller having a width of 7 mm with pressing. The applied pressure was 128 kgf (1255.2 N). After the pressurization, an operation of peeling was conducted, and the breakage of the paper substrate was confirmed. The time required from the pressurization to the breakage of the paper substrate was deemed as a set time, and the set time was determined according to the following criteria.
⊙ ... The set time was less than 2 seconds
○ ... The set time was 2 seconds or more and less than 10 seconds
Δ ... The set time was 10 seconds or more and 15 seconds or less
× ... The set time exceeded 15 seconds

**[Table 3]**

| | | Example 1 | Example 2 | Example 3 | Example 4 | Example 5 | Example 6 |
|---|---|---|---|---|---|---|---|
| Condition of stirring | | C | B | B | B | C | C |
| Aqueous phase (% by mass) | PVA1 | 34.0 | 34.0 | - | - | - | - |
| | PVA2 | - | - | 12.8 | 21.2 | 21.2 | 12.8 |
| | PVP | - | - | - | - | - | - |
| | Starch | - | - | - | - | - | - |
| | Water | 51.0 | 51.0 | 72.2 | 63.8 | 63.8 | 72.2 |
| Oil phase (% by mass) | Emulsifier 1 | 2.0 | 2.0 | 2.0 | 2.0 | 2.0 | 2.0 |
| | Emulsifier 2 | - | - | - | - | - | - |
| | Emulsifier 3 | - | - | - | - | - | - |
| | Viscosity adjusting agent | - | - | - | - | 6.5 | 4.3 |
| | Gelling agent | - | - | - | - | - | - |
| | Solvent 1 | 13.0 | 13.0 | 13.0 | 13.0 | 6.5 | 8.7 |
| | Solvent 2 | - | - | - | - | - | - |
| Total | | 100.0 | 100.0 | 100.0 | 100.0 | 100.0 | 100.0 |
| Aqueous phase : oil phase | | 85:15 | 85:15 | 85:15 | 85:15 | 85:15 | 85:15 |
| Amount of water in aqueous phase (% by mass) | | 60 | 60 | 85 | 75 | 75 | 85 |
| Amount of polymer in aqueous phase (% by mass) | | 40 | 40 | 15 | 25 | 25 | 15 |
| Viscosity of oil phase (Pa·s) | | 0.02 | 0.02 | 0.02 | 0.02 | 0.7 | 0.1 |
| Viscosity of aqueous phase (Pa·s) | | 71.4 | 71.4 | 13.9 | 52 | 52 | 13.9 |
| Viscosity of aqueous phase/viscosity of oil phase | | 3570 | 3570 | 695 | 2500 | 71 | 139 |
| Particle diameter of aqueous phase (*µ*m) [Average diameter] | | 15 | 10 | 9 | 10 | 3 | 5 |
| Storage stability | | ⊚ | ⊚ | ⊚ | ⊚ | ⊚ | ⊚ |
| Open shelf stability | | Δ | Δ | ○ | ○ | ○ | ○ |
| Set time | | ○ | ○ | ○ | ○ | Δ | Δ |

**[Table 4]**

| | | Example 7 | Example 8 | Example 9 | Example 10 | Example 11 | Example 12 | Example 13 | Example 14 | Example 15 | Example 16 | Example 17 | Example 18 | Example 19 |
|---|---|---|---|---|---|---|---|---|---|---|---|---|---|---|
| Condition of stirring | | D | C | B | A | A | A | A | B | C | B | D | A | A |
| Aqueous phase (% by mass) | PVA1 | 34,0 | 34,0 | 34,0 | 34,0 | - | - | - | - | - | - | 34,0 | - | - |
| | PVA2 | - | - | - | - | - | - | - | 12,0 | 12,0 | 12,0 | - | - | - |
| | PVP | - | - | - | - | 25,5 | 25,5 | - | - | - | - | - | - | - |
| | Starch | - | - | - | - | - | - | 35,0 | - | - | - | - | 35,0 | 35,0 |
| | Water | 51,0 | 51,0 | 51,0 | 51,0 | 59,5 | 59,5 | 50,0 | 68,0 | 68,0 | 68,0 | 51,0 | 50,0 | 50,0 |
| Oil phase (% by mass) | Emulsifier 1 | 2,0 | 2,0 | 2,0 | - | 2,0 | - | 2,0 | 2,0 | 2,0 | 2,0 | 2,0 | - | - |
| | Emulsifier 2 | - | - | - | - | - | 4,0 | - | - | - | - | - | - | - |
| | Emulsifier 3 | - | - | - | 2,0 | - | - | - | - | - | - | - | - | - |
| | Emulsifier 4 | - | - | - | - | - | - | - | - | - | - | - | 4,0 | - |
| | Emulsifier 5 | - | - | - | - | - | - | - | - | - | - | - | - | 4,0 |
| | Viscosity adjusting agent | 4,3 | 4,3 | 4,3 | 1,5 | - | 1,5 | 6,5 | 9,0 | - | - | - | 5,5 | 5,5 |
| | Gelling agent | - | - | - | - | 0,1 | - | - | - | 1,8 | 1,8 | | - | |
| | Solvent 1 | 8,7 | 8,7 | 8,7 | 11,5 | 12,9 | - | 6,5 | 9,0 | 16,2 | 16,2 | 13 | 5,5 | 5,5 |
| | Solvent 2 | - | - | - | - | - | 9,5 | - | - | - | - | - | - | |
| Total | | 100,0 | 100,0 | 100,0 | 100,0 | 100,0 | 100,0 | 100,0 | 100,0 | 100,0 | 100,0 | 100,0 | 100,0 | 100,0 |
| Aqueous phase : oil phase | | 85:15 | 85:15 | 85:15 | 85:15 | 85:15 | 85:15 | 85:15 | 80:20 | 80:20 | 80:20 | 85:15 | 85:15 | 85:15 |
| Amount of water in aqueous phase (% by mass) | | 60 | 60 | 60 | 60 | 70 | 70 | 50 | 85 | 85 | 85 | 60 | 50 | 50 |
| Amount of polymer in aqueous phase (% by mass) | | 40 | 40 | 40 | 40 | 30 | 30 | 35 | 15 | 15 | 15 | 40 | 35 | 35 |
| Viscosity of oil phase (Pa-s) | | 0,1 | 0,1 | 0,1 | 0,06 | 0,03 | 0,06 | 0,7 | 0,7 | 0,04 | 0,04 | 0,02 | 0,7 | 0,7 |
| Viscosity of aqueous phase (Pa·s) | | 71,4 | 71,4 | 71,4 | 71,4 | 36,8 | 36,8 | 50,9 | 13,9 | 13,9 | 13,9 | 71,4 | 50,9 | 50,9 |
| Viscosity of aqueous phase/viscosity of oil phase | | 714 | 714 | 714 | 1190 | 1227 | 613 | 73 | 20 | 348 | 348 | 3570 | 73 | 73 |
| Particle diameter of aqueous phase(µm) [Average diameter] | | 10 | 5 | 3 | 5 | 41 | 35 | 41 | 3 | 30 | 5 | 60 | 19 | 11 |
| Storage stability | | ⊚ | ○ | ○ | ⊚ | ⊚ | ⊚ | Δ | ○ | ⊚ | ⊚ | ○ | ○ | ○ |
| Open shelf stability | | ○ | ○ | ○ | Δ | Δ | Δ | Δ | Δ | Δ | Δ | Δ | Δ | Δ |
| Set time | | ○ | Δ | Δ | Δ | ○ | ○ | ○ | Δ | ○ | ○ | ○ | ⊚ | ⊚ |

**[Table 5]**

| | | Comparative Example 1 | | Comparative Example 3 | Comparative Example 4 | Comparative Example 5 |
|---|---|---|---|---|---|---|
| Condition of stirring | | B | | D | - | B |
| Aqueous phase (% by mass) | PVA1 | - | | - | 40,0 | - |
| | PVA2 | - | | 12,8 | - | - |
| | PVP | - | | - | - | 16,0 |
| | Starch | 29,8 | | - | - | - |
| | Water | 55,3 | | 72,2 | 60,0 | 64,0 |
| Oil phase (% by mass) | Emulsifier 1 | 2,0 | | 2,0 | - | 2,0 |
| | Viscosity adjusting agent | 4,3 | | - | - | 9,0 |
| | Gelling agent | - | | - | - | - |
| | Solvent 1 | 8,7 | | 13,0 | - | 9,0 |
| Total | | 100.0 | | 100.0 | 100,0 | 100.0 |
| Aqueous phase : oil phase | | 85:15 | | 85:15 | 100:0 | 80:20 |
| Amount of water in aqueous phase (% by mass) | | 65 | | 85 | 60 | 80 |
| Amount of polymer in aqueous phase (% by mass) | | 35 | | 15 | 40 | 20 |
| Viscosity of oil phase (Pa·s) | | 0,1 | | 0,02 | - | 0.8 |
| Viscosity of aqueous phase (Pa·s) | | 50,9 | | 13,9 | 71.4 | 30 |
| Viscosity of aqueous phase/viscosity of oil phase | | 509 | | 695 | - | 37,5 |
| Particle diameter of aqueous phase (*µ*m) [Average diameter] | | 220 | | 174 | - | 0,5 |
| Storage stability | | × | | × | ○ | Δ |
| Open shelf stability | | Δ | | Δ | × | ○ |
| Set time | | ○ | | ○ | ○ | × |

According to Tables 3 to 5, fine results were obtained in the evaluations of the storage stability, open shelf stability and set time in all of Examples 1 to 19. Thus, it is understood that the water-in-oil type emulsion adhesive according to the present invention is excellent in open shelf stability and thus a coating is difficult to be formed inside of a machine, and that the adhesive is excellent in storage stability and has a short set time, and thus can be rapidly attached with low energy. Examples 18 and 19 are adhesives using a urethane acrylate polymer as an emulsifier, and showed more excellent set time and storage stability as compared to Example 13.

Fine results were not be able to be obtained in all of the evaluations of the storage stability, open shelf stability and set time in all of Comparative Examples 1 and 3 to 5.

## Claims

1. A water-in-oil type emulsion adhesive including an oil phase and an aqueous phase, wherein the oil phase contains at least an organic solvent and an emulsifier, the aqueous phase contains at least water and a polymer compound, and the aqueous phase has a particle diameter of from 1 to 100 µm by a volume-based average diameter; wherein the emulsifier includes at least one compound selected from the group consisting of glycerine aliphatic acid esters, urethane acrylic polymers and nitrogen-containing graft polymers having polyester side chains; and the polymer compound includes at least one compound selected from the group consisting of starch, glue, polyvinyl alcohol, water-soluble cellulose, polyvinyl pyrrolidone, polyvinyl acetate, ethylene-vinyl acetate copolymer, vinyl acetate-(meth)acrylic acid ester copolymer, poly(meth)acrylic acid ester, polystyrene, styrene(meth)acrylic acid ester copolymer, styrene-butadiene copolymer, polyvinyl chloride and polyurethane.

2. The water-in-oil type emulsion adhesive according to claim 1, wherein the aqueous phase has a volume-based average diameter of from 10 to 30 µm.

3. The water-in-oil type emulsion adhesive according to claim 1, wherein the aqueous phase contains water in an amount of from 75 to 85% by mass with respect to the total mass of the aqueous phase.

4. The water-in-oil type emulsion adhesive according to claim 2, wherein the aqueous phase contains water in an amount of from 75 to 85% by mass with respect to the total mass of the aqueous phase.

## Patentansprüche

1. Emulsionshaftmittel vom Wasser-in-Öl-Typ, einschließend eine Ölphase und eine wässrige Phase, wobei die Ölphase mindestens ein organisches Lösungsmittel und ein Emulgiermittel enthält, die wässrige Phase mindestens Wasser und eine Polymerverbindung enthält und die wässrige Phase einen Teilchendurchmesser von 1 bis 100 µm, bezogen auf einen mittleren Durchmesser auf Volumen-Basis, aufweist; wobei das Emulgiermittel mindestens eine Verbindung einschließt, die aus der Gruppe ausgewählt ist, welche aus aliphatischen Glycerinsäureestern, Urethanacrylpolymeren und stickstoffhaltigen Pfropfpolymeren mit Polyester-Seitenketten besteht; und wobei die Polymerverbindung mindestens eine Verbindung einschließt, die aus der Gruppe ausgewählt ist, welche aus Stärke, Klebstoff, Polyvinylalkohol, wasserlöslicher Cellulose, Polyvinylpyrrolidon, Polyvinylacetat, Ethylen/Vinylacetat-Copolymer, Vinylacetat/(Meth)acrylsäureester-Copolymer, Poly(meth)acrylsäureester, Polystyren, Styren-(Meth)acrylsäureester-Copolymer, Styren/Butadien-Copolymer, Polyvinylchlorid und Polyurethan besteht.

2. Emulsionshaftmittel vom Wasser-in-Öl-Typ gemäß Anspruch 1, wobei die wässrige Phase einen mittleren Durchmesser auf Volumen-Basis von 10 bis 30 µm aufweist.

3. Emulsionshaftmittel vom Wasser-in-Öl-Typ gemäß Anspruch 1, wobei die wässrige Phase Wasser in einer Menge von 75 bis 85 Masse-%, bezogen auf die Gesamtmasse der wässrigen Phase, enthält.

4. Emulsionshaftmittel vom Wasser-in-Öl-Typ gemäß Anspruch 2, wobei die wässrige Phase Wasser in einer Menge von 75 bis 85 Masse-%, bezogen auf die Gesamtmasse der wässrigen Phase, enthält.

## Revendications

1. Émulsion adhésive de type eau dans l'huile comprenant une phase huileuse et une phase aqueuse, où la phase huileuse contient au moins un solvant organique et un émulsifiant, la phase aqueuse contient au moins de l'eau et un composé polymère, et la phase aqueuse présente un diamètre de particule compris entre 1 et 100 µm par diamètre moyen en volume ;
où l'émulsifiant comprend au moins un composé sélectionné parmi le groupe composé des esters d'acides aliphatiques glycérine , les polymères d'uréthane acrylique et les polymère greffés contenant de l'azote ayant des chaînes latérales de polyester ; et le composé polymère comprend au moins un composé sélectionné parmi le groupe composé d'amidon, de colle, d'alcool polyvinylique, de cellulose hydrosoluble, de polyvinylpyrrolidone, d'acétate de polyvinyle, de copolymère d'éthylène-acétate de vinyle, de copolymère d'ester d'acide (méth)acrylique, d'ester d'acide poly(méth)acrylique, de polystyrène, de copolymère d'ester d'acide de styrène (méth)acrylique, de copolymère de styrène-butadiène, de chlorure de polyvinyle et de polyuréthane.

2. Émulsion adhésive de type eau dans l'huile selon la revendication 1, où la phase aqueuse présente un diamètre moyen en volume compris entre 10 et 30 µm.

3. Émulsion adhésive de type eau dans l'huile selon la revendication 1, où la phase aqueuse contient une quantité d'eau comprise entre 75 et 85% en masse par rapport à la masse totale de la phase aqueuse.

4. Émulsion adhésive de type eau dans l'huile selon la revendication 2, où la phase aqueuse contient une quantité d'eau comprise entre 75 et 85% en masse par rapport à la masse totale de la phase aqueuse.
